(19) Europäisches Patentamt
European Patent Office
Office européen des brevets

(11) Veröffentlichungsnummer: **0 046 207**
**A1**

(12) **EUROPÄISCHE PATENTANMELDUNG**

(21) Anmeldenummer: **81105777.7**

(22) Anmeldetag: **22.07.81**

(51) Int. Cl.³: **H 02 M 1/10**, H 02 M 3/335

(30) Priorität: **14.08.80 DE 3030785**

(43) Veröffentlichungstag der Anmeldung: **24.02.82**
**Patentblatt 82/8**

(84) Benannte Vertragsstaaten: **AT BE CH FR GB IT LI NL SE**

(71) Anmelder: **LOEWE OPTA GMBH,**
**Industriestrasse 11 Postfach 220, D-8640 Kronach (DE)**

(72) Erfinder: **Kraus, Heinz, Im Schulgarten 1,**
**D-8643 Küps-Theisenort (DE)**

(54) **Schaltnetzgerät.**

(57) Bei einem Schaltnetzgerät werden aus einer gleichgerichteten Wechselspannung oder einer Gleichspannung mittels eines unsynchronisiert regelbaren Sperrschwingers Versorgungsspannungen erzeugt, die nach Gleichrichtung zur Versorgung den einzelnen Verbraucherschaltungen zugeführt werden. Damit bei Anliegen verschiedener Betriebsspannungen mittels nur eines Halbleiterschalters die gewünschten Versorgungsspannungen abgreifbar sind, sind verschiedene Primärwicklungen am Transformator des Sperrschwingers vorgesehen, die über einen Umschalter je nach Betriebsart anschaltbar sind, wobei zur Bestimmung der Regelcharakteristik der Regelschaltung gleichzeitig die die Regelcharakteristik bestimmenden, vom aufgenommenen Strom durchflossenen Bauelemente eingeschaltet werden.

1
3
4
A
8
19
9a
10
12
U3
U1~
5
20
11a
13
14
2
9b
U4
U2~
9c
11b
U7
15
16
17
7
6
18
21
22

EP 0 046 207 A1

# Schaltnetzgerät

Die Erfindung betrifft ein Schaltnetzgerät entsprechend dem Oberbegriff des Anspruchs 1.

Derartige Schaltnetzgeräte werden bevorzugt in Fernsehempfangsgeräten zur galvanischen Trennung der Empfangsschaltung vom Netz eingesetzt. Dadurch werden Probleme bei der Isolierung des Antenneneingangs bei Kopfhörerbuchsen, Videobuchsen und Tonbanddiodenbuchsen besser gelöst und außerdem Schutzmaßnahmen gegen Berühren von Chassisteilen weniger aufwendig.

Es werden zwei Basisausführungen von Schaltnetzgeräten unterschieden.

1. Ein Schaltnetzgerät mit einem Sperrschwinger, bei dem der Halbleiterschalter periodisch über einen von der Primärseite des Netztransformators abgeleiteten Rückkopplungsweg leitend gesteuert wird.

2. Ein Halbleiterwechselrichter mit einem Halbleiterschalter, der von einem Impulsdauermodulator gesteuert wird.

In beiden Schaltnetzgeräten werden durch geeignete Regelschaltungen die Schaltfrequenz und die jeweilige Schaltperiode in Abhängigkeit von der Stromaufnahme der Schaltung bzw. der an den Sekundärwicklungen des Trenntransformators angeschlossenen Verbraucher geregelt, derart, daß die von den Sekundärwicklungen abgegriffenen und gleichgerichteten verschiedenen Verbraucherspannungen konstant bleiben.

Ein Schaltnetzgerät gemäß der ersten Ausführung ist aus der DE-OS 27 27 332 bekannt. Ein Schaltnetzgerät gemäß der zweiten Ausführung ist aus der DE-AS 23 45 073 Fig. 1 bekannt. Bei der Verwendung eines Sperrschwingers muß jedoch zum Zwecke des Anlaufens des Schaltnetzgerätes dafür gesorgt werden, daß der Halbleiterschalter erstmalig leitend geschaltet wird.

Die Auslegung der Dimensionierung des Halbleiterwechselrichters mit dem Trenntransformator ist abhängig von der Betriebsspannung, wenn mittels des Regelkreises auf nahezu konstante stabilisierte Verbraucherspannungen hingeregelt werden soll.

Aus der DE-AS 23 45 073 ist es bekannt, verschiedene Versorgungsspannungen, z.B. eine höhere Wechselspannung oder eine niedrigere Gleichspannung, anzuschalten.
Um bei beiden Betriebsarten gleiche Ausgangsbetriebsspannungen abgreifen zu können, ist bei diesen Schaltnetzgeräten für jede Betriebsart ein gesonderter Halbleiterwechselrichter vorgesehen, der jeweils aus einem Schalttransistor mit zugehöriger Primärwicklung auf dem Transformator besteht, wobei die Einschaltdauer des Schalttransistors durch einen Impulsdauermodulator in Abhängigkeit der von den Verbraucherschaltungen aufgenommenen Leistung steuerbar ist. Bei Anliegen von zwei verschiedenen Versorgungsspannungen sind somit zwei völlig unabhängig voneinander arbeitende Halbleiterwechselrichter vorzusehen.

Der Erfindung liegt die Aufgabe zugrunde, ein Schaltnetzgerät eingangs genannter Art derart auszubilden, daß verschiedene Versorgungsspannungen anschaltbar sind, und dennoch auf stabilisierte Betriebsspannungen für die Verbraucher hingeregelt wird, ohne für jede Betriebsart einen gesonderten Halbleiterwechselrichter vorzusehen.

Die Aufgabe wird erfindungsgemäß durch die im Anspruch 1 wiedergegebene technische Lehre gelöst.

Bei der erfindungsgemäß ausgebildeten Schaltung werden zur Anpassung der Halbleiterwechselrichter an die verschiedenen Betriebsarten keine zusätzlichen aktiven Bauelemente, wie Halbleiterschalter, benötigt. Die Umschaltung erfolgt durch einen Dreh- oder Tastschalter mit einer entsprechenden Anzahl von Schaltkontakten. Da gleichzeitig mit dem Anschalten der verschiedenen Primärwicklungen entsprechend der Betriebsart in den Halbleiterwechselrichterkreis auch die verschiedenen, als Stromfühler ausgebildeten, die Regelcharakteristik des Regelkreises bestimmenden Bauelemente angeschaltet werden, bleibt die Regelcharakteristik der Regelschaltung erhalten, d.h. die an den Sekundärseiten abgreifbaren Betriebsspannungen, die gleichgerichtet sind, sind konstant bei unterschiedlichen Eingangsversorgungsspannungen, und zwar über den gesamten Regelbereich, unabhängig von der gewählten Betriebsart. Wenn sich die Regelcharakteristik ändert, z.B. bei Verwendung nur eines Stromfühlers, so wird eine höhere oder niedrigere Ausgangsbetriebsspannung abgreifbar sein und auf diesen Nennwert hingeregelt.

Es ist bekannt, daß die Regelcharakteristik der Regelschaltung durch die Festlegung des Arbeitspunktes des Regeltransistors bestimmt ist. Der Arbeitspunkt wird sich somit verschieben, sobald Basis- und Emitterwiderstand des Regeltransistors geändert werden bzw. an einem der beiden Widerstände eine andere Betriebsspannung angelegt wird. In einfacher Weise wird als Bauelement, das die Regelcharakteristik bestimmt, ein Widerstand vorgesehen, der als Stromfühler dient und von dem eine dem durch den Schalttransistors des Halbleiterwechselrichters fließenden Strom proportionale Spannung als Regelspannung abgreifbar ist, die dem Regeltransistor zugeführt wird. Würde der Widerstand in der gleichen Dimensionierung für die verschiedenen Betriebsarten, z.B. 220 V und 110 V, beibehalten werden, so würden bei 110 V Betriebsspannung ein doppelt so hoher Spannungsabfall an dem Widerstand liegen und damit die Regelcharakteristik des Regelkreises völlig verändert werden und die an den Sekundärwicklungen abgreifbaren Betriebsspannungen auf neue Werte geregelt werden. Der Widerstand muß deshalb bei Reduzierung der Versorgungsspannung von 220 V auf 110 V geändert werden, so daß bei doppeltem Nennstrom ein gleich großer Spannungsabfall abgreifbar und dem Regeltransistor als Emitterspannung zuführbar ist. Entsprechend der Abweichung von einem Sollwert wird der Halbleiterschalter früher oder später leitend geschaltet bzw. die Periodendauer des leitenden Zustands länger oder kürzer gewählt.

In einer weiteren Ausgestaltung der Erfindung sind nach Anspruch 3 in dem Stromversorgungsweg Sicherungen für die verschiedenen Betriebsarten vorgesehen. Wird die Spannung niedrigerer, so regelt das Schaltnetzgerät zwar auf konstante stabile Ausgangsspannungen hin. Es wird jedoch ein wesentlicher höherer Strom gezogen. Die dann verwendeten Sicherungen müssen dieser höheren Nennstrombelastung entsprechen. Ist z.B. für den 220 V Betrieb eine 1 A Sicherung vorgesehen, so muß diese bei 110 V Betrieb durch eine 2 A Sicherung ersetzt werden. Die Erfindung sieht nun vor, daß hier mittels eines weiteren Umschalters die verschiedenen Sicherungen synchron mit dem Umschalter auf die andere Betriebsart eingeschaltet werden.

Die Erfindung wird nachstehend anhand der Fig. 1 bis 4 beispielsweise erläutert.

0046207

Es zeigen:

Fig. 1 ein Prinzip-Schaltbild der Erfindung für ein Schaltnetzgerät mit Impulsdauermodulator,

Fig. 2 ein weiteres Prinzip-Schaltbild für ein Schaltnetzgerät mit periodischer Ansteuerung des Halbleiterschalters über einen Rückkopplungsweg,

Fig. 3 verschiedene Sicherungen, die über einen Umschalter entsprechend der Betriebsart anschaltbar sind, und

Fig. 4 einen Stromlaufplan einer erfindungsgemäß ausgebildeten Schaltung in einem Fernsehempfänger.

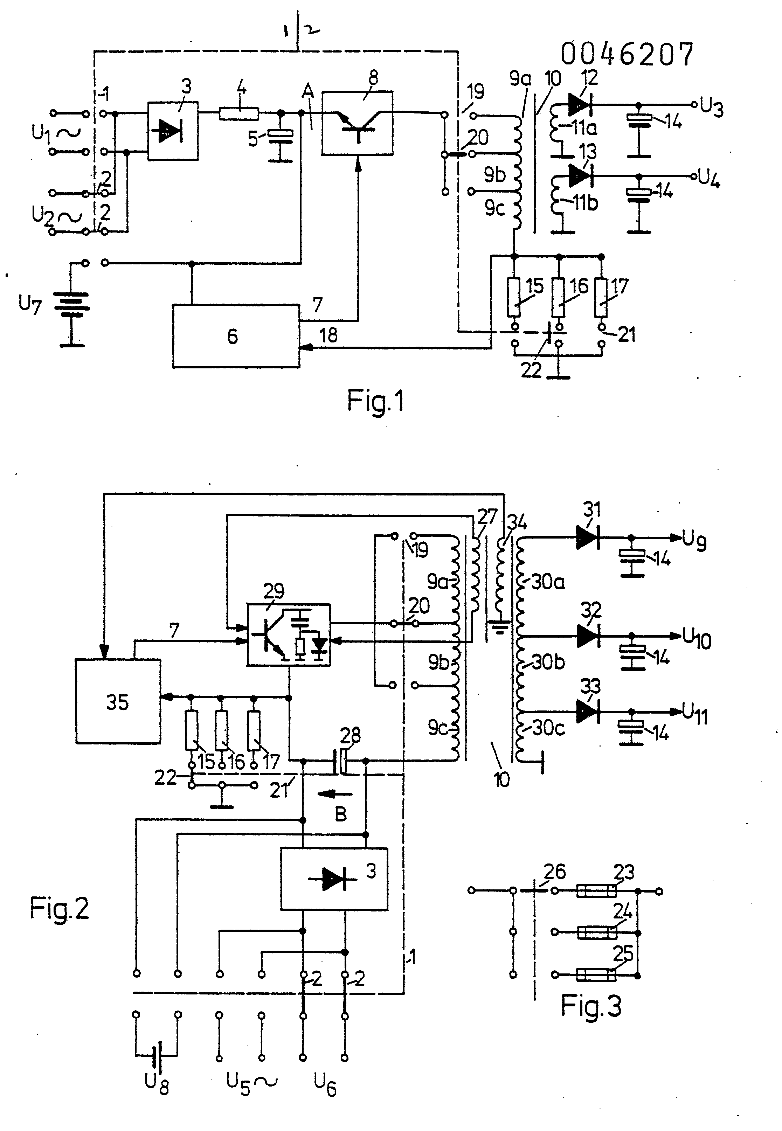

In Fig. 1 sind mit $U_1$, $U_2$ zwei Wechselspannungsquellen, z.B. mit 110 V und 220 V, wie sie beim kommerziellen Wechselspannungsnetzgegeben sind, bezeichnet. Ferner ist mit $U_7$ eine Gleichstromquelle bezeichnet, die am Eingang eines gemeinsamen Netzschalters 1 mit den Wechselspannungsquellen $U_1$ und $U_2$ angeschlossen ist. Über diesen Netzschalter 1 werden mittels der Schaltkontakte 2 wahlweise die einzelnen Spannungsquellen an das Schaltnetzgerät angeschaltet. Den Wechselstromquellen $U_1$ und $U_2$ ist hinter dem Netzschalter 1 ein Brückengleichrichter 3 nachgeschaltet, der die anliegende Wechselspannung zunächst in eine Gleichspannung umwandelt, die zwecks Glättung über den Ladewiderstand 4 dem Ladekondensator 5 zugeführt wird. Hinter dem Ladekondensator 5 liegt auch der Einspeisungspunkt für die Gleichspannungsquelle $U_7$, die wahlweise bei Betätigung des Netzschalters 1 durch Verschieben der Kontakte anschaltbar ist. Vom Ladekondensator 5 ist auch eine Betriebsspannung abgreifbar für einen Phasenmodulator 6, der über seinen Steuerausgang 7 den Halbleiterschalter 8 des erfindungsgemäß ausgebildeten Halbleiterwechselrichters ansteuert. Bei dem verwendeten Halbleiterschalter handelt es sich um einen Transistor, der symbolisch in dem Block 8 eingezeichnet ist. Über den Transistor wird aus dem Ladekondensator 5 ein Strom in eine der Primärwicklungen 9a, 9b eingespeist. Der Trenntransformator 10 bewirkt, daß aus der am Ladekondensator 5 abgreifbaren Gleichspannung erneut eine Wechselspannung hoher Frequenz in den Sekundärwicklungen 11a und 11b erzeugt wird. Die dort abgreifbaren Spannungen werden mittels Dioden 12 und 13 gleichgerichtet und Lade- bzw. Glättungskondensatoren 14, 15 zugeführt, von denen sie als Betriebsspannungen $U_3$ und $U_4$ für die Stromversorgung der Geräteschaltungen abgegriffen werden. Der Fußpunkt der Primärwicklungen 9a bis 9c ist über Widerstände 15, 16, 17 an Masse geschaltet. Diese Widerstände 15, 16, 17 dienen gleichzeitig als Stromfühler für den durch den Halbleiterschalter 8 fließenden Strom. Von den Widerständen ist eine dem durch den Halbleiter fließenden Strom proportionale Spannung abgreifbar, die als Regelgröße über den Eingang 18 dem Phasenmodulator zugeführt wird, der in Abhängigkeit eines eingestellten Sollwertes eine Phasenmodulation vornimmt, derart, daß die Periodendauer, während der der Halbleiterschalter 8 leitend geschaltet ist, derart groß gewählt ist, daß die Spannungen und damit die sekundärseitig abgreifbare Betriebsspannung $U_3$ und $U_4$ stabilisiert und konstant sind. Erfindungsgemäß ist nun vorgesehen, daß der Halbleiterschalter 8 an verschiedene Primärwicklungen 9a,b,c des Trenntransformators 10 anschaltbar ist. Dies ist abhängig von der gewählten Versorgungsspannung $U_1$, $U_2$ bzw. $U_7$. Zu diesem Zweck ist ein Umschalter 19 vorgesehen, der mit dem Schaltkontakt 20 synchron mit dem Netzschalter 1 geschaltet wird, so daß stets die Primärwicklung angeschaltet ist, deren Windungszahl der angelegten Versorgungsspannung $U_1$, $U_2$ $U_7$ zugeordnet ist, so daß gleiche Betriebsspannungen

$U_3$ $U_4$ abgreifbar sind, wobei die Regelung auf den entsprechenden Spannungswert hin über den Impulsdauerdemodulator 6 erfolgt. Im dargestellten Ausführungsbeispiel sind die Wicklungen 9b und 9c angeschaltet, wobei die Spannung $U_2$ als Versorgungsspannung anliegt. Da die Stromaufnahme abhängig ist von der anliegenden Betriebsspannung, müssen, um die Regelcharakteristik des Impulsdauermodulators beizubehalten und damit die konstanten Ausgangsspannungen $U_3$, $U_4$ bei unterschiedlichen Versorgungsspannungen zu gewährleisten, verschiedene Stromfühler, also Widerstände 15, 16, 17 vorgesehen sein und jeweils der gewählten Betriebsart entsprechend angeschaltet werden. Dies erfolgt über einen weiteren Umschalter 21, dessen Umschaltkontakt 22 in diesem Fall den Widerstand 16 als Stromfühlerwiderstand anschaltet. Liegt die Versorgungsspannung $U_1$ an, so werden sowohl die Schaltkontakte 2 des Netzschalters 1 als auch die Schaltkontakte 20 und 22 der Umschalter 19 und 21 umgeschaltet. Die Ansteuerung des Halbleiterschalters 8 erfolgt in bekannter Weise über Treibertransformatoren, wie sie z.B. in der DE-AS 21 45 073 dargestellt sind.

Als Besonderheit ist eine Schnittstelle A vor dem Halbleiterschalter 8 vorgesehen. In diese Schnittstelle A ist eine Sicherungsanordnung gemäß Fig. 3 einfügbar. Die Sicherungsanordnung besteht aus parallel angeordneten Sicherungen 23, 24, 25, die über einen weiteren Umschalter 26 wahlweise synchron mit Betätigung des Netzschalters 1 anschaltbar sind. Die Strombelastbarkeit der Sicherungen 23, 24, 25 ist unterschiedlich und abhängig von der jeweils angeschalteten Versorgungsspannungsquelle $U_1$, $U_2$, $U_7$, da, um die konstanten Ausgangsspannungen bei unterschiedlichen Versorgungsspannungen zu erzielen, unterschiedlich hohe Ströme fließen.

In Fig. 2 ist ein weiteres Beispiel eines Schaltnetzgerätes dargestellt, das sich vom ersten Ausführungsbeispiel darin unterscheidet, daß das Schaltnetzteil als Sperrschwinger ausgebildet ist und mittels einer Rückkopplungswicklung 27 selbstschwingend ausgebildet ist. Über einen Netzschalter 1 mit Schaltkontakten 2 sind die Wechselspannungsquelle $U_5$ und $U_6$ sowie eine Gleichstromquelle $U_8$ anschaltbar. Den Wechselspannungsquellen $U_5$ und $U_6$ ist, wie im Ausführungsbeispiel nach Fig. 1, ein gemeinsamer Brückengleichrichter 3 nachgeschaltet, der die Wechselspannung zunächst in eine Gleichspannung umwandelt, die an einem Ladekondensator 28 ansteht. An den Ladekondensator 28 direkt anschaltbar ist die Gleichspannungsquelle $U_8$. Die Gleichspannung am Ladekondensator 28 ist über einen Halbleiterschalter 29, der primär aus einem basisgesteuerten Schalttransistor besteht, an die Arbeitswicklungen 9a, 9b, 9c des Trenntransformators 10 über einen zwischengeschalteten Umschalter 19 mit dem Schaltkontakt 20 angelegt. Mittels der Rückkopplungswicklung 27 ist die Schaltung derart selbstschwingend ausgebildet, daß der Halbleiterschalter 29 periodisch mit einer Frequenz von etwa 25 kHz geschlossen und geöffnet wird. Dadurch entstehen an den Sekundärwicklungen 30a, 30b, 30c Spannungsimpulse, aus denen mit den an den Abgriffen angeschalteten Gleichrichtern 31, 32, 33 Betriebsspannungen $U_9$, $U_{10}$, $U_{11}$ zur Versorgung der nachgeschalteten Verbraucherschaltungen gewonnen werden. Die Gleichspannungen werden in Ladekondensatoren 14 gespeichert. Z.B. kann $U_9$ die Betriebsspannung für die Zeilenendstufe eines Fernsehempfängers sein, $U_{10}$ für den HF- und Videoteil und $U_{11}$ für die Stromversorgung der NF-Stufen des Fernsehempfängers. Von einer Wicklung 34 des Trenntransformators 10 wird außerdem eine Regelschaltung 35 gespeist. Darin wird die Amplitude der Impulsspannung an der Wicklung 34 mit einer Bezugsspannung verglichen und daraus eine Stellgröße gewonnen. Diese steuert über den Steuerausgang 7 die Einschaltdauer des Halbleiterschalters 4. Die Regelcharakteristik der Regelschaltung 35 wird bestimmt durch die als Stromfühler dienenden Widerstände 15, 16, 17, von denen eine dem das Halbleiterschaltungselement 29 durchfließenden Strom proportionale Spannung als Vorspannung für den Regeltransistor oder -Thyristor abgegriffen wird. Soll die Regelcharakteristik bei Anschalten der verschiedenen Versorgungsspannungen die gleiche sein, so müssen die Widerstände der jeweiligen Versorgungsspannung entsprechend angepaßt werden. Nur dann ist gewährleistet, daß die Impulsdauermodulation des Regelkreises 35 der jeweiligen Betriebsart derart angepaßt ist, daß bei unterschiedlichen Versorgungsspannungen $U_9$, $U_{10}$, $U_{11}$ die Ausgangsspannungen konstant sind. Dies wird bewerkstelligt durch den Umschalter 21 mit dem Umschaltkontakt 22, der synchron mit den Umschaltkontakten 2 des Netzschalters 1 geschaltet wird. In gleicher Weise werden synchron auch die verschiedenen Primärwicklungen 9a, 9b, 9c der gewählten Betriebsart entsprechend angeschaltet. Die Schnittstelle B, die oberhalb des Brückengleichrichters 3 eingezeichnet ist, ist vorgesehen für das Zwischenfügen von Sicherungselementen gemäß Fig. 3. Diese werden, wie in Fig. 1, synchron angeschaltet, so daß ein optimaler Schutz ebenfalls gewährleistet ist.

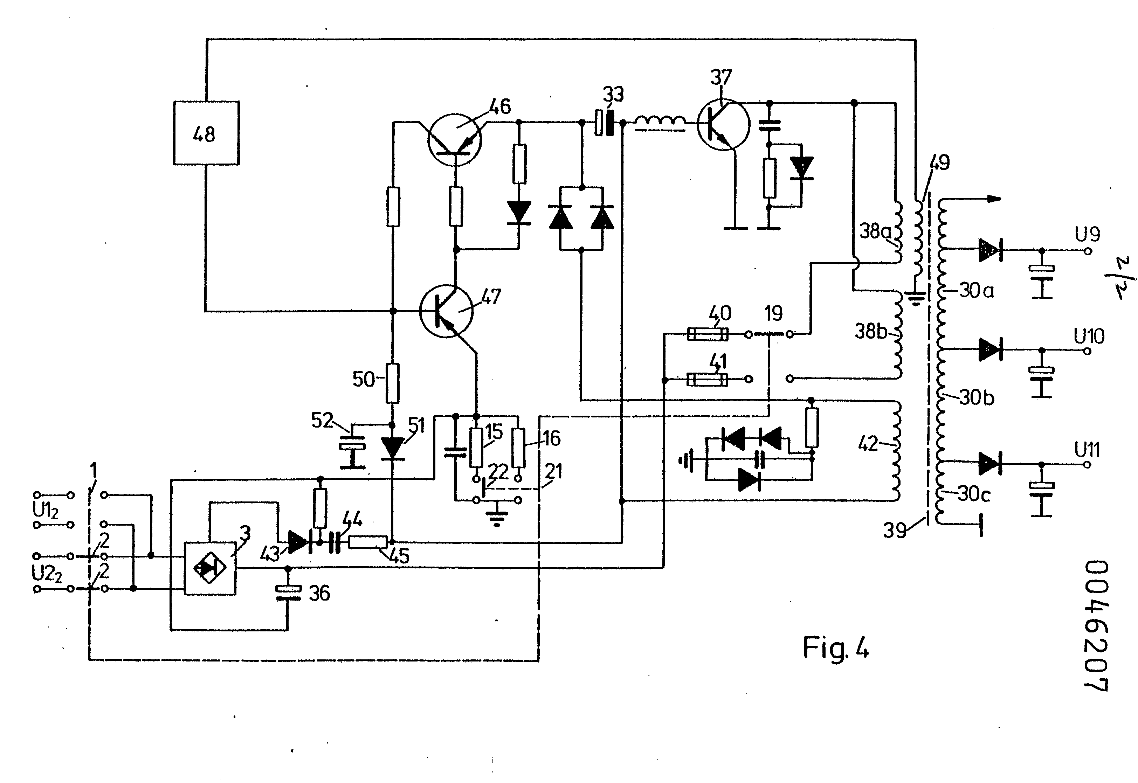

In Fig. 4 ist ein Stromlaufplan eines Schaltnetzgerätes gemäß der Erfindung dargestellt. Über einen Neztschalter 1 mit den Schaltkontakten 2 sind Netzversorgungsspannungen $U_1$ und $U_2$ wahlweise anschaltbar, z.B. $U_1$ 220 V, $U_2$ 110 V Wechselspannung. In dem nachgeschalteten Brückengleichrichter 3 wird aus der Wechselspannung eine Gleichspannung erzeugt, die als Versorgungsspannung dem Schaltnetzteil über den Ladekondensator 36 zugeführt wird. Bei dem verwendeten Sperrschwinger handelt es sich um einen nicht synchronisierten Sperrschwinger, der bei 20 bis 28 kHz arbeitet, und bei dem sich sowohl die Frequenz als auch das Tastverhältnis entsprechend der Eingangsspannung über den Rückkopplungsweg ändern. Als Halbleiterschalter dient der Schalttransistor 37, der als npn-Transistor ausgebildet ist und mit seinem Emitter gegen Masse und seinem Kollektor an zwei verschiedene Primärwicklungen 38a und 38b des Trenntransformators 39 anschaltbar ist. Die Primärwicklungen 38a,b werden über Schalter 19 wahlweise angeschaltet, mit denen in Reihe die Sicherungen 40, 41 geschaltet sind. Die Sicherungen 40, 41 sind entsprechend der gewählten Betriebsart verschieden strombelastbar. Der Umschaltkontakt 19 wird synchron mit den Netzschaltern 1 geschaltet. Der Schalttransistor 37 wird über seine Basis angesteuert. Er ist Bestandteil des selbstschwingenden Sperrwandlers, der mit Hilfe der Rückkopplungswicklung 42 selbstschwingend angesteuert wird, derart, daß die Frequenz des Sperrwandlers und das Tastverhältnis sich nach der Eingangsspannung einstellen. Die Regelung der Ausgangsspannung, d.h. die Regelung der Betriebsspannungen, erfolgt über die Beeinflussung der während der Flußphase in den Transformator eingespeicherten Energie. Dafür ist die Öffnungszeit, d.h. die Impulsdauer für die Ansteuerung des Schalttransistors 37, ausschlaggebend. Für die Konstanz der Ausgangsspannung ist ein Gleichgewicht zwischen der eingespeicherten Energie in der Flußphase und der entnommenen Energie in der Sperrphase erforderlich. Die Regelung erfolgt durch Beeinflussung der eingespeicherten Energie über eine Kontrolle des Kollektorstufenstromes, der durch den Schalttransistor 37 fließt.

Die Schaltung schwingt selbsttätig mit Hilfe der Rückkopplungswicklung 42. Zum Anlaufen der Schaltung wird über die Gleichrichterdiode 43 eine pulsierende Gleichspannung an den Koppelkondensator 44 gelegt, zu dem in Reihe ein Widerstand 45 geschaltet ist. Über diesen Widerstand 45 wird der Schalttransistor 37 erstmals leitend geschaltet, wenn ein Halbwellenimpuls an seiner Basis über den Gleichrichter 43 anliegt. Das Abschalten des Transistors 37 erfolgt mittels des Treibertransistors 46, der von einem Regeltransistor 47 der Regelschaltung 48 angesteuert wird. An den Widerständen 15 und 16, die mit dem Emitter des Regeltransistors 47 verbunden und über einen Umschalter 21 mit dem Schaltkontakt 22 wahlweise gegen Masse geschaltet sind, ergibt sich ein dem Kollektorstrom des Transistors 37 proportionaler Spannungsabfall, da der Ladekondensator 36 so geschaltet ist, daß über den Anschluß ein Strom über den Widerstand 15 oder 16 gegen Masse fließt, der sich mit dem Kollektorstrom proportional verändert. Die Basis des Regeltransistors 47 ist über die Regelschaltung 48, in der die über die Wicklung 49 abgegriffene Spannung mit einer Referenzspannung verglichen wird, vorgespannt. Die Vorspannung wird über den Widerstand 50 der Diode 51 und den Kondensator 52 an die Basis des Transistors 47 gelegt. Die negative Spannung wird mittels der Rückkopplungswicklung erzeugt. Der Spannungsabfall an den Widerständen 15 oder 16, der am Emitter des Transistors 47 anliegt, wirkt der Basisspannung entgegen. Soweit sich das Spannungsverhältnis über die Regelschaltung durch Vergleich mit einer Referenzspannung derart ändert, daß der Schalttransistor 47 leitend schaltet, so wird auch der Schalttransistor 46 des Treibertransistors leitend, so daß der Pluspol des Kondensators 43 auf Emitterpotential des Schalttransistors 37 gelegt wird. An der Basis des Schalttransistors 37 erscheint ein negatives

Potential und der Transistor schaltet ab. Der Transistor 47 bleibt nur während der Abschalt- und Ausräumphase des Schalttransistors 37 leitend. Die ihre Polarität ändernde Rückkopplungsspannung löscht den Transistor 47 über seine Basis wieder. Mit dem Festlegen des Spannungspotentials an der Basis über die Regelschaltung 48 und den Widerstand 50 wird der maximal mögliche Kollektorstrom festgelegt. Durch die zeitliche Änderung der Leitendzeiten des Transistors 37 wird die Energieaufnahme des Trenntransformators dahingehend geregelt, daß die an den Sekundärwicklungen 30a, 30b, 30c abgreifbaren gleichgerichteten und geglätteten Spannungen $U_9$, $U_{10}$, $U_{11}$ konstant sind. Erfindungswesentlich ist dabei, daß die Primärwicklungen an einen gemeinsamen Schalttransistor anschaltbar sind, wobei die Windungsanzahl den entsprechend angeschalteten Versorgungsspannungen angepaßt ist.

Patentansprüche

1. Schaltnetzgerät zur Stromversorgung eines Gleichstromverbrauchers wahlweise von einem Wechselstromnetz relativ hoher oder niedriger Spannung oder von einer Gleichstromquelle relativ niedriger Spannung, die über einen Umschalter wahlweise anschaltbar sind, wobei bei Anschluß an ein Wechselstromnetz die Wechselspannung zunächst gleichgerichtet und die Gleichspannung dann mittels eines Halbleiterwechselrichters erneut in eine Wechselspannung umgewandelt wird, welcher Halbleiterwechselrichter aus einer in Reihe mit der Gleichstromquelle geschalteten Primärwicklung eines Transformators und einem in Reihe hiermit geschalteten Halbleiter besteht, der periodisch von einem Impulsdauermodulator ober über einen von der Primärseite des Transformators abgeleiteten Rückkopplungsweg leitend gesteuert wird, wobei die Schaltfrequenz und/oder die Einschaltdauer des Halbleiterschalters über eine Regelschaltung in Abhängigkeit von der Leistungsaufnahme der an die Sekundärwicklungen über Gleichrichterschaltungen angeschlossenen Verbraucherschaltungen geregelt wird, dadurch gekennzeichnet, daß für jede Betriebsart ein gemeinsamer Halbleiterschalter (8,29,37) vorgesehen ist, der über einen Umschalter (19) je nach Betriebsart an verschiedene Primärwicklungen (9a,b,c;38a,b) des Transformators (10,39) anschaltbar ist, und daß eine der Anzahl der schaltbaren Betriebsarten entsprechende Anzahl von die Regelcharakteristik der Regelschaltung bestimmenden Bauelementen (15,16,17) vorgesehen sind, von denen jeweils eine dem durch den leitend gesteuerten Halbleiterschalter (8,29,37) fließenden Strom proportionale Spannung abgreifbar ist, die synchron mit der Umschaltung auf eine andere Betriebsart an die Regelschaltung (6,35,47) geschaltet wird, wobei die Bauelemente derart bemessen sind, daß die Regelcharakteristik der Regelschaltungen bei allen Betriebsarten gleich ist.

2. Schaltnetzgerät nach Anspruch 1, dadurch gekennzeichnet, daß für jede Betriebsart in dem Versorgungsweg des Schaltnetzgerätes eine der Nennstrombelastung bei den einzelnen Betriebsarten entsprechende Sicherung (23,24,25) vorgesehen ist, die mit dem Umschalter (19) für die verschiedenen Primärwicklungen (9a,b,c) synchron geschaltet wird, derart, daß bei niedrigerer Spannung eine Sicherung mit einer entsprechend höheren Strombelastbarkeit eingeschaltet ist und umgekehrt.

1
2
U1 ~
U2 ~
2
2
U7
1
3
4
5
A
8
6
7
18
19
20
9a
9b
9c
10
12
13
11a
11b
14
14
U3
U4
15
16
17
21
22

Fig.1

Fig.2

Fig.3

48
46
33
37
47
49
38a
38b
42
39
40
41
19
50
52
51
15
16
22
21
1
2
2
U12
U22
3
43
44
45
36
30a
30b
30c
U9
U10
U11

Fig. 4

2/2

0046207

Europäisches Patentamt

# EUROPÄISCHER RECHERCHENBERICHT

0046207

Nummer der Anmeldung

EP 81 10 5777

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | DE - A - 2 239 838 (LICENTIA)<br>* Seiten 3 bis 7 *<br>-- | 1 | H 02 M 1/10<br>3/335 |
| A | US - A - 2 778 976 (HOLSTROM)<br>* Spalte 1, Zeile 65 bis Spalte 3, Zeile 20 *<br>----- | 1 | |

RECHERCHIERTE SACHGEBIETE (Int. Cl.³)

H 02 M 1/10
3/335
H 02 H 11/00
H 02 P 13/32

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 23.11.1981 | BERTIN |